# EUROPEAN PATENT SPECIFICATION

(11) **EP 1 623 935 B1**
(45) Date of publication and mention of the grant of the patent: **17.09.2008**
(21) Application number: 05107222.1
(22) Date of filing: 05.08.2005
(51) Int. Cl.: B65D 88/12, B60J 7/06

(54) **Container with sliding canopy construction**
Behälter mit aufrollbarer Plane
Conteneur avec bâche coulissante

(30) Priority: 05.08.2004 NL 1026788
(43) Date of publication of application: 08.02.2006
(73) Proprietor: Trans-Com B. V., 3846 CG Harderwijk (NL)
(72) Inventor: Wijnbergen, Leendert, 8071 RW, Nunspeet (NL); Bouwers, Aart, 3852 NG, Ermelo (NL)
(74) Representative: van Westenbrugge, Andries

(56) References cited:
- EP-A- 1 207 069
- DE-A1- 19 644 573
- GB-A- 2 199 549
- GB-A- 2 387 153
- US-A- 5 152 575
- US-A- 5 524 953

## Description

The invention relates to a container according to the preambule of claim 1.

Such a container is generally known. This known container is, for example, a container with standard dimensions, such as an ISO container, which can be used for transport by lorry or by rail. The dimensions of the container must remain within the ISO standard during transport. The sliding canopy construction of this container constitutes a canopy structure.

An other example is US 5 152 575 which discloses a container according to the preambule of claim 1.

However, loading and unloading this container is time-consuming. Loading of goods to be transported first of all requires sliding of the sliding canopy construction into the folded position, in which the bows are essentially slid into contact with one another and the covering sheet is folded up between the bows. As a result the container is only partially open, that is to say it is not possible to expose the entire loading floor. After all, the bows brought into contact with one another with the covering sheet between them span part of the loading floor. This part is therefore not accessible to a crane from above or from the side.

After loading the accessible part of the loading floor the sliding canopy construction has to be slid above this, as a result of which the part of the loading floor previously obscured by the folded back sliding canopy construction is exposed. Only then can loading of the loading floor be continued. Once the entire loading floor has been loaded, the sliding canopy construction is moved into the folded out position. The bows or canopy members are slid apart during this operation, the covering sheet being stretched over the loading floor of the subframe. The container is then closed, that is to say the goods to be transported that are on the loading floor are screened from the surroundings.

After transport to the desired location, unloading of the container gives rise to the same laborious operations. As a consequence of this the use of this container is relatively expensive.

An object of the invention is to provide a container with which loading and unloading is simplified.

Said object is achieved by a container according to claim 1. According to the invention the guide means can be slid between a retracted position, in which the guide means are within a plane delimited by the subframe, and an extended position, in which the guide means protrude with respect to said plane in order to form a boom, and in that the bows can be accommodated on the boom in the folded position.

According to the invention the sliding canopy construction is provided with a double-acting guide. The bows of the sliding canopy construction are guided such that they can slide over the guide means, which, in turn, themselves are also able to slide with respect to the subframe. For loading the container according to the invention the bows are slid to one end of the guide means, after which it is possible to move that end, with the bows slid into contact with one another, until it is beyond the loading floor. With this arrangement the guide means form the boom for the bows in the folded position. As a result the complete loading surface of the loading floor is freely accessible from above and from the side for loading and unloading. Since the loading floor can be exposed and covered by the canopy structure in one movement, loading and unloading of the container is appreciably simplified according to the invention.

According to the invention it is preferable that the guide means comprise two guide rails, which are installed on either side of the subframe, wherein the bows can be slid with respect to said guide rails and the guide rails can be slid with respect to the subframe. The bows include an end bow that is fixed to the guide means, wherein the guide means can be driven from the retracted position into the extended position by moving said end bow. As a result the driving of the guide rails is linked to the driving of the bows. When it is moved, the end bow takes with it the guide rails fixed to said end bow. The end bow moves, for example, because the other bows push against it.

According to the invention it is possible that the container has an upright front wall that is fitted at one end of the subframe, and that the bows are provided with a front bow, at least one intermediate bow and an end bow, it being possible for the front bow to adjoin the front wall, and the end bow being fixed to the guide means. The end bow can be made as a closed rear wall. The front bow can preferably be driven, such as by an air-operated drive. By sliding the bows into the folded position, the front bow first moves into contact with the intermediate bow or intermediate bows, which then reach the end bow. When all bows are in contact with one another, the front bow pushes the end bow, with the guide means fixed thereto, outwards.

According to the invention the guide rails can each have a protruding ridge that can be engaged by the front bow during movement from the extended position into the retracted position. During closure of the sliding canopy construction the front bow pulls the further bows apart until the front bow reaches the protruding ridge. With this arrangement the protruding ridge is arranged such that the bows are in the folded out position at this stage, that is to say the covering sheet is stretched. The front bow then moves further towards the upright front wall, the guide rails being taken with it via the ridges into the retracted position. As a result the guide rails can therefore be driven from the extended position into the retracted position by driving the bows, in particular the movement of the front bow up to the front wall. After all, during this movement the end bow, which takes with it the guide rails fixed thereto, also moves.

According to the invention it is possible that at each bottom end the front bow and each intermediate bow have several guide elements, such as bearing rollers, which are arranged some distance apart, wherein the guide rails are each enclosed between at least two guide elements. In this case at least one guide element engages on a first longitudinal side of the guide rail and at least a further guide element engages on a second longitudinal side of the guide rail that is opposite the first longitudinal side. Effective guiding is achieved by this means.

One embodiment according to the invention has at least one lateral hinged bow, that is connected to the intermediate bow and/or the front bow and/or the end bow such that it can hinge, wherein the hinge axis thereof is at or close to a bottom end of the intermediate bow and/or the front bow and/or the end bow. During movement of the bows from the folded out position into the folded position, the lateral hinged bows lift the covering sheet to some extent. Because the hinge is fitted in a low position, that is to say close to the subframe, only minimum lifting of the covering sheet takes place.

According to the invention it is preferable that the guide rails each have a guide slot in the longitudinal direction thereof, wherein the subframe has several guide elements, such as bearing rollers, which are accommodated in the respective guide slots. In this case the double-acting guide according to the invention is less susceptible to malfunction and requires little maintenance.

According to the invention it is possible that the sliding canopy construction can be driven by a motor. In contrast to the known manually operated sliding canopy constructions, the sliding canopy construction according to the invention can be automatically opened and closed as a result. The motor is preferably an air-operated motor, so that compressed air can power the automatic operation of the sliding canopy construction.

The drive for the sliding canopy construction can be constructed in various ways. For example, at least one drive chain in the subframe is run around two sprockets that are fitted close to the ends of the subframe, the drive chain being connected to the front bow by means of a catch. With this arrangement a sprocket can be driven by the motor.

According to the invention it is preferable that the catch comprises a chain gripper and a link rod, which link rod is connected at a first end to the chain gripper such that it can pivot and is connected at a second end to the front bow such that it can pivot. The link rod enables the front bow to slide onto the boom despite the limit on the movement of the chain gripper at the rear sprocket fixed to the subframe.

With this arrangement the link rod can have a length such that, with the chain gripper in the outermost position limited by the sprocket, the front bow is completely outside the plane delimited by the subframe. In this case this length of the link rod guarantees a completely free loading surface of the loading floor.

According to one embodiment according to the invention the front wall has at least one locking hook for engaging on the front bow, which locking hook can be moved between a locking position, in which the front bow is gripped by the locking hook, and a release position, in which the front bow is released by the locking hook. The locking hook can be pretensioned in the direction of the locking position by a balance arm. The locking hook guarantees that the sliding canopy construction does not open unintentionally during transport, for example as a consequence of vibration.

The locking hook can be operated by air-operated bellows.

According to the invention the front bow can have a strip of rubber on the side facing the front wall and the front wall can have a corresponding rib on the side facing the front bow. As a result the closed container according to the invention is essentially watertight.

If the bows are convex on the side facing away from the subframe, precipitation will not collect on the top of the sliding canopy construction during transport but will simply run off the covering sheet under the influence of gravity.

According to the invention the covering sheet can have a plastic strip at the bottom which extends in the longitudinal direction from the front bow to the end bow. The plastic strip causes the covering sheet between the bows to move outwards during the movement into the folded position. As a result the risk of jamming of the sliding canopy construction is minimal.

The invention also relates to a container, wherein the dimensions of the container in the folded out position essentially correspond to the dimensions of an ISO container.

The invention will now be explained in more detail below with reference to an illustrative embodiment shown in the drawing.
Fig. 1 shows a side view of a container according to the invention that has been closed by the sliding canopy construction;
Fig. 2 shows a front view of the container shown in Fig. 1;
Fig. 3 shows a side view of the container shown in Fig. 1 where the loading floor has been completely exposed;
Fig. 4 shows a rear view of the container shown in Fig. 1;
Fig. 5 shows an enlarged detail according to V in Fig. 1;
Fig. 6 shows an enlarged detail of the drive motor;
Fig. 7 shows a cross-sectional view of the detail according to VII in Fig. 4;
Fig. 8 shows an enlarged detail according to VIII in Fig. 3.

In the figures the container according to the invention is indicated in its entirety by 1. The container 1 according to the invention can be a container that can be set down and that can be transported by various modes of transport. The container 1 according to the invention is, for example, a so-called "multi-modal container", which can be suitable for transport by rail. In addition, the container 1 according to the invention can be accommodated on a lorry or a trailer. It is also possible that the container 1 has standard dimensions that are determined by international regulations, such as of a standard ISO container. Of course, the invention is furthermore applicable to any further holder or container.

The container 1 has a subframe or undercarriage 2 that is provided with corner castings 5 standardised in accordance with the ISO standard. In this illustrative embodiment the length dimension between the corner castings is 6058 mm and the width dimension between the corner castings 5 is 2259 mm. Furthermore, the subframe 2 has two grapple pockets 6 on each of the two longitudinal sides of the container 1, by means of which the container can be lifted up and set down by a crane. In this illustrative embodiment the container 1 can consequently be removed from transport means, such as a railway wagon, lorry or trailer.

The subframe 2 has a loading floor 3 for accommodating goods to be transported. In this illustrative embodiment the loading floor 3 has three spaces 7 for accommodating wire rolls or sheet rolls. A wire or sheet roll has a central core around which wire or sheet, respectively, is wound. An upright front wall 11 is provided at one end of the subframe 2.

The container 1 furthermore has a sliding canopy construction that is indicated in its entirety by 9. The sliding canopy construction 9 comprises a front bow 14, multiple intermediate bows 15 and an end bow 16. The canopy structure 9 furthermore has lateral hinged bows 17 that are joined to the bows 14, 15, 16 such that they can hinge. The intermediate bows 15 have two lateral hinged bows 17 on either side thereof, whilst the front bow 14 and the end bow 16 each have only one lateral hinged bow 17.

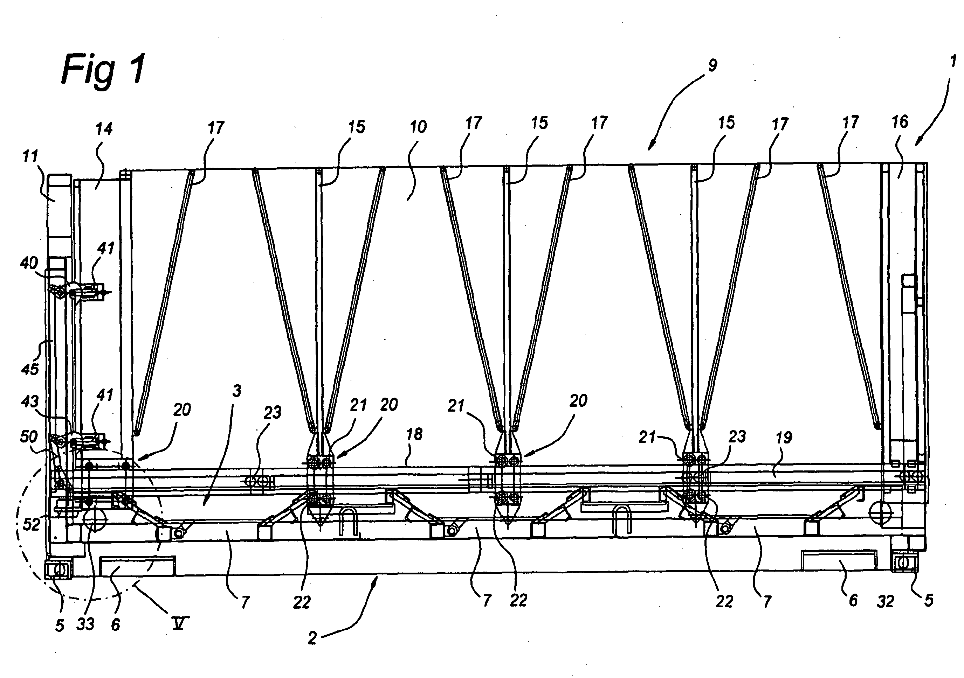

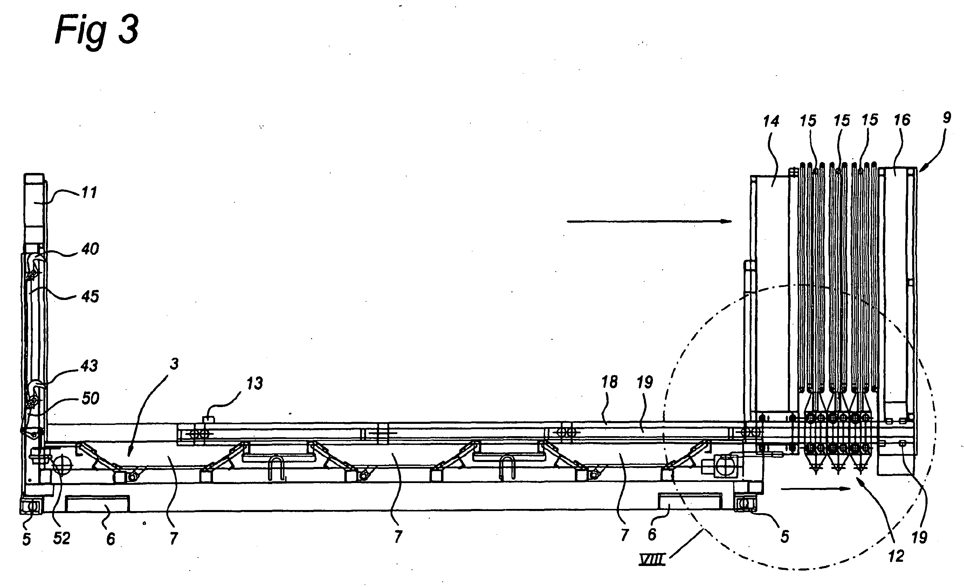

A flexible covering sheet 10 is wrapped over the bows 14, 15, 16 and connected thereto, for example by means of loops (not shown). The bows 14, 15, 17 can be slid over guide means 18 between a folded out position shown in Fig. 1 and a folded back position shown in Fig. 3. The guide means 18 constitute supporting means on which the bows 14, 15, 17 bear such that they can slide.

In the folded out position the bows 14, 15, 16, 17 have been pushed apart to fold out the covering sheet 10 over the loading floor 3. In the folded back position, the bows 14, 15, 16, 17 have been pushed against one another, the covering sheet 10 being folded up between the bows 14, 15, 16, 17. Because the hinges of the hinged bows 17 are fitted low down, that is to say close to the subframe 2, the hinged bows 17 lift the covering sheet 10 to only a slight extent when it is folded up.

The covering sheet 10 is provided on the inside thereof with a plastic strip (not shown). The plastic strip runs along the bottom of the covering sheet 10 in the longitudinal direction thereof. The plastic strip facilitates folding up of the covering sheet 10 because the plastic strip always forces the parts between the bows 14, 15, 17 outwards.

For watertight protection of the load during transport, the covering sheet 10 is made of an essentially watertight plastic. On the side facing the front bow 14, the upright front wall 11 furthermore has a rib that runs in the peripheral direction thereof. On the side facing the upright front wall 11, the front bow 14 has a corresponding strip of rubber. When the upright front wall 11 and the front bow 14 are in contact with one another there are no gaps between them as a result, which means that a watertight seal is ensured.

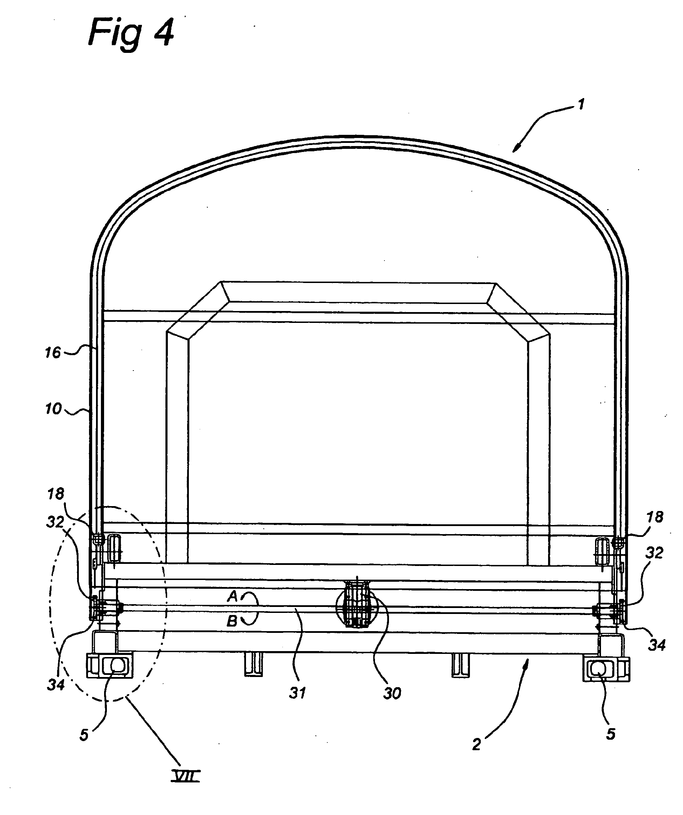

As is shown most clearly in Fig. 4, the bows 14, 15, 16, 17 have a convex curved shape at the top thereof. This shape reduces the risk that precipitation, such as snow and rain, is able to collect on the covering sheet 10.

The sliding canopy construction 9 furthermore comprises the guide means, in other words supporting means for supporting the bows such that they can slide, which in this illustrative embodiment are constituted by two guide rails 18. The guide rails 18 run in the longitudinal direction on either side of the container 1 (see Fig. 4). The front bow 14 and the intermediate bows 15 can be slid over the guide rails 18, whilst the end bow 16 is permanently fixed to the guide rails 18.

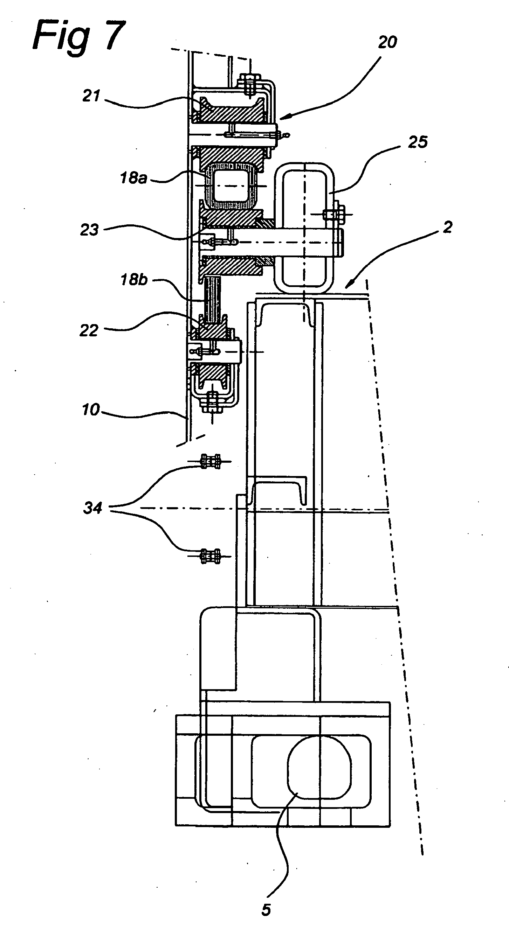

For this purpose the front bow 14 and the intermediate bows 15 each have a guide foot 20 at the two bottom ends thereof. Each guide foot 20 has upper bearing rollers 21, which engage on the top 18a of the guide rails 18 and bottom bearing rollers 22 which engage on the underside 18b of the guide rails 18 (see in particular Fig. 7). In this way the upper bearing rollers 21 and lower bearing rollers 22, which are arranged some distance apart, enclose the guide rails 18 in cross-section.

According to the invention the guide rails 18 are themselves also able to slide. For this purpose the guide rails 18 each have a guide slot 19 in the longitudinal direction thereof. Bearing rollers 23, which are joined to a fixing beam 25 of the subframe 2 such that they can turn, are accommodated in the slot 19. The slidable guiding of the bows 14, 15 with respect to the guide rails 18 and the slidable guiding of the guide rails 18 with respect to the subframe 2 therefore constitute a double-acting guide. Of course, this double-acting guide according to the invention can be constructed in various ways.

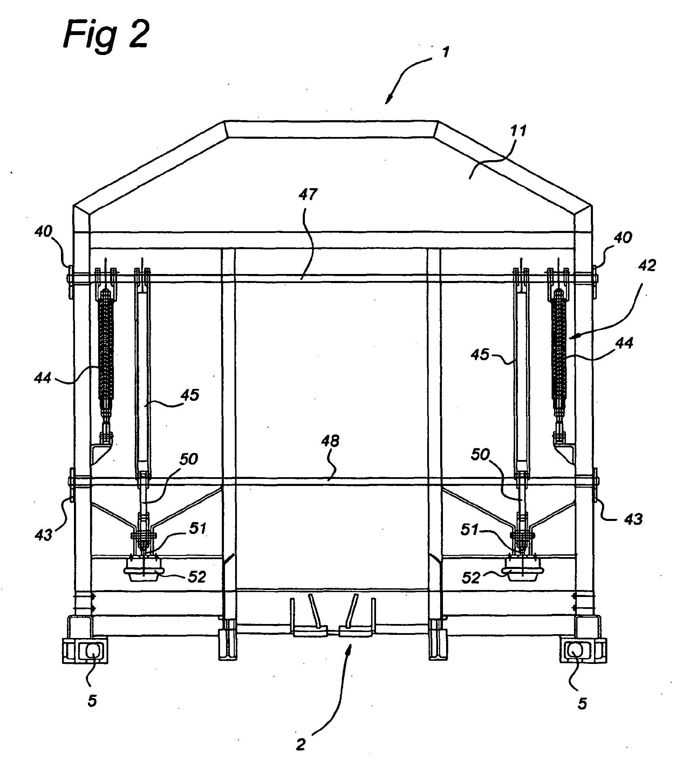

The guide rails 18, which are permanently joined to the end bow 16, can thus be slid between the retracted position shown in Fig. 1 and the extended position shown in Fig. 2. In the retracted position the guide rails 18 are within the plane that is delimited by the subframe 2, such as within the standard dimensions of an ISO container. In the extended position the guide rails 18 protrude with respect to that plane. With this arrangement the guide rails 18 form a boom 12, on which the bows 14, 15, 16, 17 can be accommodated in the folded back position.

The guide rails 18 each have a protruding ridge 13 between the front bow 14 and the upright front wall 11. During sliding of the front bow 14 over the guide rails towards the front wall 11 the front bow 14 engages on these ridges 13 in order to move the guide rails 18 from the extended position into the retracted position.

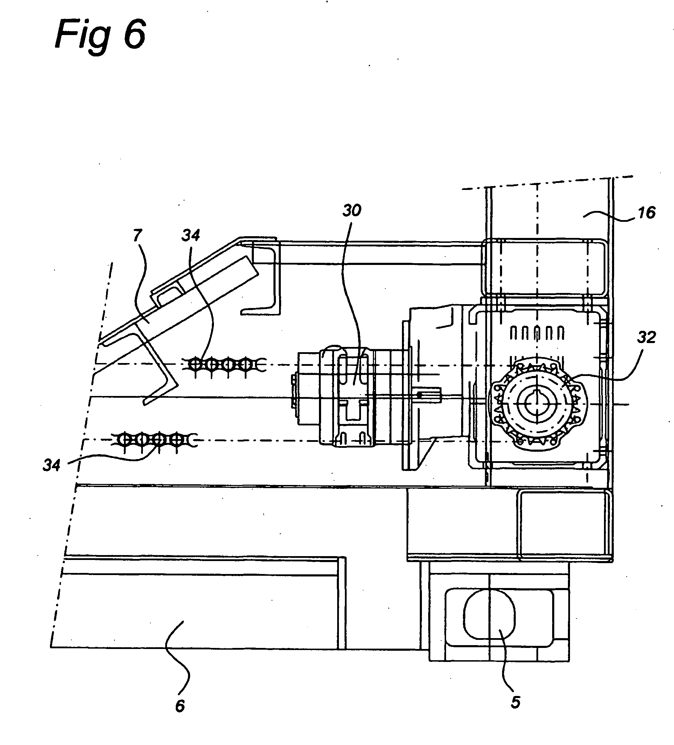

An air-operated drive motor 30, which is shown most clearly in Figs 4 and 6, is provided for driving the sliding canopy construction 9. The air-operated motor 30 has an output drive shaft 31 that drives a sprocket 32 on each longitudinal side of the container 1. A drive chain 34 is run between the driven sprocket 32 and a further sprocket 33. The further sprocket 33 is located close to the upright front wall 11. In this illustrative embodiment there is one such chain drive in each case on both longitudinal sides of the container 1, but a single chain drive is also possible.

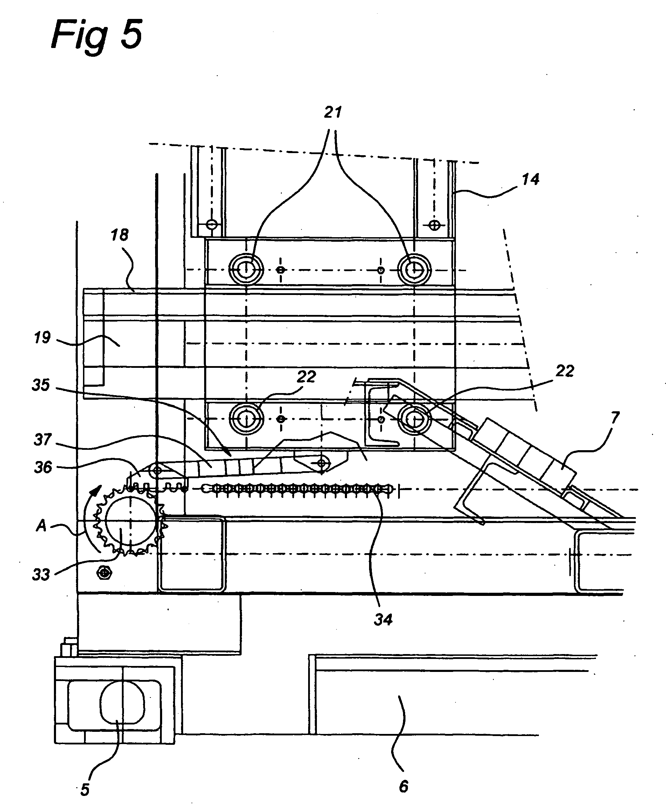

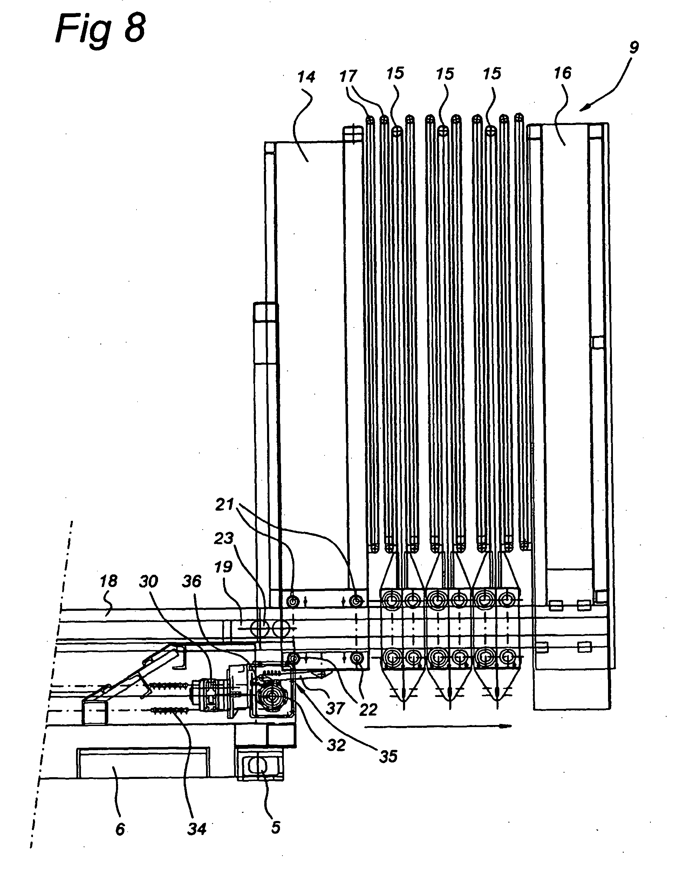

As is most clearly shown in Figs 5 and 8, the drive chain 34 is connected by a catch 35 to the front bow 14. The catch 35 comprises a chain gripper 36 that is inserted between the chain. This chain gripper 36 is connected to a first end of a link rod 37 such that it can pivot. The opposite end of the link rod 37 is connected to the front bow 14 such that it can pivot.

As a result of the presence of the link rod 37 of the catch 35 it is possible to move the front bow 14 onto the boom 12 in the extended position. When the chain gripper 36 has reached the driven sprocket 32, as shown in Figure 8, further rotation is impossible. In this extreme position the front bow 14 is some distance away from said chain gripper 36, which distance is determined by the length of the link rod 37. By choosing this length to be sufficiently long, the front bow 14 can also be slid completely beyond the surface of the loading floor 3.

As shown in Figs 1 - 3, the upright front wall 11 has locking hooks 40, 43. In this illustrative embodiment an upper locking hook 40 and a lower locking hook 43 are provided in each case on either side of the upright front wall 11. These locking hooks 40, 43 can lock into corresponding brackets 41 on the front bow 14. If the front bow 14 abuts against the upright front wall 11 the sliding canopy construction 9 can be locked by these locking hooks 40, 43.

The locking hooks 40, 43 can be pivoted between the locking position shown in Fig. 1 and the release position in which they have been moved upwards, shown in Figure 3. For actuation of the locking hooks 40, 43 the container 1 has an operating mechanism 42. The operating mechanism 42 has two balance arms 44 in which a compression spring is accommodated. The balance arms 44 provide pretensioning of the locking hooks 40, 43 in the direction of the locking position.

The upper locking hooks 40 are fixed to the ends of a common upper rotary rod 47, whilst the lower locking hooks 43 are fixed to the ends of a common lower rotary rod 48. The rotary rods 47 and 48 are connected to one another by link arms 45. The link arms 45 are, in turn, each connected to a lever 50 that can be actuated by, in each case, a piston rod 51 of an air-operated bellows 52.

The mode of operation of the container 1 according to the invention is as follows. During transport the sliding bows 14, 15, 17 are in the folded out position, the container being closed (see Fig. 1). The bows 14, 15, 16 have been slid apart and the lateral hinged bows 17 have been hinged outwards, that is to say away from the bows 14, 15, 16. The covering sheet 10 is thus stretched between the bows 14, 15, 17. The front bow 14 is in contact with the upright front wall 11, the rib on the upright front wall 11 and the rubber strip on the front bow 14 producing a watertight join. The locking hooks 40, 43 are engaged in the hook brackets 41 of the front bow 14 under the influence of the pretensioning of the balance arms 44. The sliding canopy construction 9 is thus locked.

Compressed air is then fed to a compressed air feed (not shown) of the container 1. The compressed air first actuates the air-operated bellows 52 to open the locking hooks 40, 43 via the operating mechanism 42. The compressed air is then fed to the air-operated motor 30, which makes the drive shaft 31 rotate in the direction of arrow A (see Fig. 4). Since the sprockets 32 are fixed to the drive shaft 31, the drive chain 34 running between the sprockets 32, 33 will likewise be moved in the direction of arrow A as a result.

The front bow 14 is connected to the drive chain 34 via the catch 35, so that the front bow 14 is taken with it to the right from the position shown in Fig. 1. The sliding direction corresponds to the longitudinal direction of the container. The front bow 14 moves over the guide rails 18 into contact with the adjacent intermediate bow 15, which can slide freely. During this movement the lateral hinged bows 17 hinge into contact with the front bow 14 and the intermediate bow 15, the covering sheet 10 being folded up between them. After the front bow 14 and the adjacent intermediate bow 15 are in contact with one another, these are pulled jointly towards the following intermediate bow 15, and so on, until the front bow 14 and the intermediate bows 15 taken with it have been slid in contact with one another against the end bow 16. The sliding canopy construction 9 is then in the folded or folded back position in which the covering sheet 10 partially exposes the loading floor 3. In particular, the two accommodating spaces 7 located closest to the front wall 11 will be accessible from the side and from above, whilst in this position the third accommodating space 7, furthest to the right in Figs 1 and 3, is still obscured by the sliding canopy construction 9 in the folded back position.

As a result of continued driving, the front bow 14 pushes, via the intermediate bows 15, against the end bow 16 that is fixed to the slidable guide rails 18. As a result the guide rails 18 slide beyond the horizontal plane delimited by the subframe 2, into the extended position shown in Fig. 3. A sensor (not shown) detects the desired outward travel of the guide rails 18, after which the compressed air feed is shut off. In the extended position the guide rails 18 form the boom 12, on which the bows 14, 15, 16, 17 are accommodated. In this position the complete surface of the loading floor 3 is exposed. This means that loading and unloading of the container 1 can take place after sliding of the bows in a single direction.

To close the sliding canopy construction 9 compressed air is supplied to rotate the drive shaft 31 driven by the air-operated motor 30 in the opposite direction, which is indicated by arrow B (see Fig. 4). The front bow 14 is then pulled by the drive chain 34, via the catch 35, from the position shown in Fig. 3 towards the upright front wall 11. The bows 14, 15, 17 then slide apart, the covering sheet being folded out over the loading floor 3. When the front bow 14 reaches the ridge 13 arranged on the guide rails 18, the sliding canopy construction 9 is in the folded out position, that is to say the bows are essentially the maximum distance apart. The front bow 14 then moves further towards the upright front wall 11, so that the guide rails 18 are taken with it via the ridges 13. The guide rails 18 then slide to the left in Fig. 3 until the retracted position shown in Fig. 1 has been reached. The compressed air feed is then shut off, after which the locking hooks 40, 43 engage in the hook brackets 41 under the influence of the balance arms 44.

## Claims

1. Container (1) comprising a subframe (2) that is provided with a loading floor (3), as well as a sliding canopy construction (9), comprising a covering sheet (10), several bows (14, 15, 16) and guide means (18) for guiding the bows (14, 15) in a sliding manner, wherein the covering sheet (10) is fitted over the bows (14, 15, 16) and is attached thereto, and wherein the bows (14, 15) are guided in a sliding manner with respect to the subframe (2) by means of the guide means (18), which sliding canopy construction (9) is slidable between a folded position, in which the bows (14, 15, 16) have been slid towards one another to fold the covering sheet (10), and a folded out position, in which the bows (14, 15, 16) have been slid apart to fold out the covering sheet (10) over the loading floor (3), wherein the guide means (18) are slidable between a retracted position, in which the guide means (18) are within a plane delimited by the subframe (2), and an extended position, in which the guide means (18) protrude with respect to said plane in order to form a boom (12), and in that the bows (14, 15, 16) can be accommodated on the boom (12) in the folded position, **characterised in that** the bows (14, 15, 16) comprise an end bow (16) that is fixed to the guide means (18), and wherein the guide means (18) can be driven from the retracted position into the extended position by moving said end bow (16).

2. Container according to Claim 1, wherein the guide means comprise two guide rails (18), which are installed on either side of the subframe (2), wherein the bows (14, 15) are slidable with respect to said guide rails (18) and the guide rails (18) are slidable with respect to the subframe (2).

3. Container according Claim 1 or 2, wherein the container (1) has an upright front wall (11) that is fitted at one end of the subframe (2), and wherein the bows are provided with a front bow (14), at least one intermediate bow (15) and the end bow (16), it being possible for the front bow (14) to adjoin to the front wall (11), and the end bow (16) being fixed to the guide means (18).

4. Container according to Claim 2, wherein the guide rails (18) each have a protruding ridge (13) that can be engaged by the front bow (14) during movement from the extended position into the retracted position.

5. Container according to Claim 3 or 4, wherein at each bottom end the front bow (14) and the intermediate bow (15) have several guide elements (21, 22), such as bearing rollers, which are arranged some distance apart, wherein the guide rails (18) are each enclosed between at least two guide elements (21, 22).

6. Container according to Claim 5, wherein at least one lateral hinged bow (17) is provided, that is connected to the intermediate bow (15) and/or the front bow (14) and/or the end bow (16) such that it can hinge, wherein the hinge axis thereof is at or close to a bottom end of the intermediate bow (15) and/or the front bow (14) and/or the end bow (16).

7. Container according to one of Claims 2 - 6, wherein the guide rails (18) each have a guide slot (19) in the longitudinal direction thereof, and wherein the subframe (2) has several guide elements (23), such as bearing rollers, which are accommodated in the respective guide slots (19).

8. Container according to one of the preceding claims, wherein the sliding canopy construction (9) can be driven by a motor, preferably an air-operated motor (30).

9. Container according to one of the preceding claims, wherein at least one drive chain (34) of the subframe (2) is run around two sprockets (32, 33) that are fitted close to the ends of the subframe (2), the drive chain (34) being connected to the front bow (14) by means of a catch (35).

10. Container according to Claim 9, wherein one sprocket (32) can be driven by the motor (30).

11. Container according to Claim 9 or 10, wherein the catch (35) comprises a chain gripper (36) and a link rod (37), which link rod (37) is connected at a first end to the chain gripper (36) such that it can pivot and is connected at a second end to the front bow (14) such that it can pivot.

12. Container according to claim 3, wherein the front wall (11) comprises at least one locking hook (40, 43) for engaging on the front bow (14), which locking hook (40, 43) is movable between a locking position, in which the front bow (14) is gripped by the locking hook (40, 43), and a release position, in which the front bow (14) is released by the locking hook (40, 43).

13. Container according to Claim 12, wherein the locking hook (40, 43) is pretensioned in the direction of the locking position by a balance arm (44).

14. Container according to Claim 12 or 13, wherein the locking hook (40, 43) can be operated by an air-operated bellows (52) in the direction of the release position.

15. Container according to claim 3 wherein the front bow (14) comprises a strip of rubber on the side facing the front wall (11) and the front wall (11) has a corresponding rib on the side facing the front bow (14).

16. Container according to one of the preceding claims, wherein the bows (14, 15, 16) are convex on the side facing away from the subframe (2).

17. Container according to one of the preceding claims, wherein the covering sheet (10) comprises a plastic strip at the bottom thereof which extends in the longitudinal direction from the front bow (14) to the end bow (16).

18. Container according to one of the preceding claims, wherein the dimensions of the container (1) in the folded out position essentially correspond to the dimensions of an ISO container.

## Patentansprüche

1. Container (1) mit einem Unterrahmen (2), der mit einem Ladeboden (3) sowie mit einer Schiebeplanenkonstruktion (9) versehen ist, die eine Abdeckbahn (10), mehrere Spriegel (14, 15, 16) und Führungseinrichtungen (18) zum Führen der Spriegel (14, 15) auf schiebende Weise aufweist, wobei die Abdeckbahn (10) über den Spriegeln (14, 15, 16) aufgepaßt und daran angebracht ist und wobei die Spriegel (14, 15) im Hinblick auf den Unterrahmen (2) mit Hilfe der Führungseinrichtungen (18) auf schiebende Weise geführt werden, wobei die Schiebeplanenkonstruktion (9) zwischen einer eingefalteten Position, in der die Spriegel (14, 15, 16) zusammengeschoben wurden, um die Abdeckbahn (10) einzufalten, und einer entfalteten Position verschiebbar ist, in der die Spriegel (14, 15, 16) auseinandergeschoben wurden, um die Abdeckbahn (10) über dem Ladeboden (3) zu entfalten, wobei die Führungseinrichtungen (18) zwischen einer eingefahrenen Position, in der die Führungseinrichtungen (18) in einer durch den Unterrahmen (2) begrenzten Ebene liegen, und einer ausgefahrenen Position verschiebbar sind, in der die Führungseinrichtungen (18) im Hinblick auf die Ebene vorstehen, um einen Ausleger (12) zu bilden, und wobei die Spriegel (14, 15, 16) auf dem Ausleger (12) in der eingefalteten Position untergebracht sein können, **dadurch gekennzeichnet, daß** die Spriegel (14, 15, 16) einen Endspriegel (16) aufweisen, der an den Führungseinrichtungen (18) befestigt ist, und wobei die Führungseinrichtungen (18) durch Bewegen des Endspriegels (16) aus der eingefahrenen Position in die ausgefahrene Position angetrieben werden können.

2. Container nach Anspruch 1, wobei die Führungseinrichtungen zwei Führungsschienen (18) aufweisen, die auf jeder Seite des Unterrahmens (2) eingebaut sind, wobei die Spriegel (14, 15) im Hinblick auf die Führungsschienen (18) verschiebbar sind und die Führungsschienen (18) im Hinblick auf den Unterrahmen (2) verschiebbar sind.

3. Container nach Anspruch 1 oder 2, wobei der Container (1) eine aufrechte Frontwand (11) hat, die an einem Ende des Unterrahmens (2) angepaßt ist, und wobei die Spriegel mit einem Frontspriegel (14), mindestens einem Zwischenspriegel (15) und dem Endspriegel (16) versehen sind, wobei es möglich ist, daß der Frontspriegel (14) an die Frontwand (11) angrenzt und der Endspriegel (16) an den Führungseinrichtungen (18) befestigt ist.

4. Container nach Anspruch 2, wobei die Führungsschienen (18) jeweils eine vorstehende Leiste (13) haben, mit der der Frontspriegel (14) bei der Bewegung aus der ausgefahrenen Position in die eingefahrene Position einen Eingriff herstellen kann.

5. Container nach Anspruch 3 oder 4, wobei an jedem unteren Ende der Frontspriegel (14) und der Zwischenspriegel (15) mehrere Führungselemente (21, 22) wie z. B. Laufrollen haben, die in einem gewissen Abstand voneinander angeordnet sind, wobei die Führungsschienen (18) jeweils zwischen mindestens zwei Führungselementen (21, 22) eingeschlossen sind.

6. Container nach Anspruch 5, wobei mindestens ein Seitengelenkspriegel (17) vorgesehen ist, der mit dem Zwischenspriegel (15) und/oder dem Frontspriegel (14) und/oder dem Endspriegel (16) so verbunden ist, daß er gelenkig sein kann, wobei seine Gelenkachse an oder nahe einem unteren Ende des Zwischenspriegels (15) und/oder des Frontspriegels (14) und/oder des Endspriegels (16) liegt.

7. Container nach einem der Ansprüche 2 bis 6, wobei die Führungsschienen (18) jeweils einen Führungsschlitz (19) in ihrer Längsrichtung haben und wobei der Unterrahmen (2) mehrere Führungselemente (23) wie z. B. Laufrollen hat, die in den jeweiligen Führungsschlitzen (19) untergebracht sind.

8. Container nach einem der vorstehenden Ansprüche, wobei die Schiebeplanenkonstruktion (9) durch einen Motor, vorzugsweise einen druckluftbetätigten Motor (30), angetrieben werden kann.

9. Container nach einem der vorstehenden Ansprüche, wobei mindestens eine Antriebskette (34) des Unterrahmens (2) um zwei Kettenräder (32, 33) geführt ist, die nahe den Enden des Unterrahmens (2) angepaßt sind, wobei die Antriebskette (34) mit Hilfe eines Mitnehmers (35) mit dem Frontspriegel (14) verbunden ist.

10. Container nach Anspruch 9, wobei ein Kettenrad (32) durch den Motor (30) angetrieben werden kann.

11. Container nach Anspruch 9 oder 10, wobei der Mithnehmer (35) einen Kettengreifer (36) und eine Verbindungsstange (37) aufweist, wobei die Verbindungsstange (37) an einem ersten Ende mit dem Kettengreifer (36) so verbunden ist, daß sie schwenken kann, und an einem zweiten Ende mit dem Frontspriegel (14) so verbunden ist, daß sie schwenken kann.

12. Container nach Anspruch 3, wobei die Frontwand (11) mindestens einen Schließhaken (40, 43) zum Eingreifen am Frontspriegel (14) aufweist, wobei der Schließhaken (40, 43) zwischen einer Schließposition, in der der Frontspriegel (14) durch den Schließhaken (40, 43) ergriffen ist, und einer Löseposition beweglich ist, in der der Frontspriegel (14) durch den Schließhaken (40, 43) gelöst ist.

13. Container nach Anspruch 12, wobei der Schließhaken (40, 43) durch einen Ausgleichsarm (44) in Richtung der Schließposition vorgespannt ist.

14. Container nach Anspruch 12 oder 13, wobei der Schließhaken (40, 43) durch einen druckluftbetätigten Balg (52) in Richtung der Löseposition betätigt werden kann.

15. Container nach Anspruch 3, wobei der Frontspriegel (14) einen Streifen aus Gummi auf der zur Frontwand (11) weisenden Seite aufweist und die Frontwand (11) eine entsprechende Rippe auf der zum Frontspriegel (14) weisenden Seite hat.

16. Container nach einem der vorstehenden Ansprüche, wobei die Spriegel (14, 15, 16) auf der vom Unterrahmen (2) weg weisenden Seite konvex sind.

17. Container nach einem der vorstehenden Ansprüche, wobei die Abdeckbahn (10) einen Kunststoffstreifen an ihrer Unterseite aufweist, der sich vom Frontspriegel (14) zum Endspriegel (16) in Längsrichtung erstreckt.

18. Container nach einem der vorstehenden Ansprüche, wobei die Abmessungen des Containers (1) in der entfalteten Position im wesentlichen den Abmessungen eines ISO-Containers entsprechen.

## Revendications

1. Conteneur (1) comportant un faux châssis (2) qui est muni d'un plancher de chargement (3), ainsi que d'une construction de bâche coulissante (9), comprenant une feuille de recouvrement (10), plusieurs arceaux (14, 15, 16) et des moyens de guidage (18) pour guider les arceaux (14, 15) de manière coulissante, dans lequel la feuille de recouvrement (10) est montée sur les arceaux (14, 15, 16) et y est fixée, et dans lequel les arceaux (14, 15) sont guidés de manière coulissante par rapport au faux châssis (2) à l'aide de moyens de guidage (18), construction de bâche coulissante (9) qui peut coulisser entre une position repliée, dans laquelle les arceaux (14, 15, 16) ont été coulissés l'un vers l'autre, pour replier la feuille de recouvrement (10), et une position déployée, dans laquelle les arceaux (14, 15, 16) ont été coulissés éloignés l'un de l'autre, pour déployer la feuille de recouvrement (10) au-dessus du plancher de chargement (3), dans lequel les moyens de guidage (18) peuvent coulisser entre une position rétractée, dans laquelle les moyens de guidage (18) se trouvent dans un plan délimité par le faux châssis (2), et une position sortie, dans laquelle les moyens de guidage (18) ressortent par rapport audit plan, pour former un bras en porte-à-faux (12), et dans lequel les arceaux (14, 15, 16) peuvent être reçus sur le bras en porte-à-faux (12) en position repliée, **caractérisé par le fait que** les arceaux (14, 15, 16) comprennent un arceau d'extrémité (16) qui est fixé aux moyens de guidage (18), et dans lequel les moyens de guidage (18) peuvent être entraînés de la position rétractée à la position sortie en déplaçant ledit arceau d'extrémité (16).

2. Conteneur selon la revendication 1, dans lequel les moyens de guidage comprennent deux rails de guidage (18) qui sont installés de chaque côté du faux châssis (2), dans lequel les arceaux (14, 15) peuvent coulisser par rapport auxdits rails de guidage (18) et les rails de guidage (18) peuvent coulisser par rapport au faux châssis (2).

3. Conteneur selon la revendication 1 ou 2, dans lequel le conteneur (1) présente une paroi avant droite (11) qui est montée à une extrémité du faux châssis (2), et dans lequel les arceaux sont pourvus d'un arceau avant (14), au moins d'un arceau intermédiaire (15) et de l'arceau d'extrémité (16), où il est possible que l'arceau avant (14) soit uni à la paroi avant (11) et que l'arceau d'extrémité (16) soit fixé aux moyens de guidage (18).

4. Conteneur selon la revendication 2, dans lequel les rails de guidage (18) présentent, chacun, une arête saillante (13) avec laquelle peut venir en prise l'arceau avant (14) pendant le déplacement de la position sortie à la position rétractée.

5. Conteneur selon la revendication 3 ou 4, dans lequel, à chaque extrémité inférieure, l'arceau avant (14) et l'arceau intermédiaire (15) présentent plusieurs éléments de guidage (21, 22), tels que des rouleaux de roulement, qui sont disposés à une certaine distance l'un de l'autre, dans lequel les rails de guidage (18) sont confinés, chacun, entre au moins deux éléments de guidage (21, 22).

6. Conteneur selon la revendication 5, dans lequel est prévu au moins un arceau articulé latéral (17) qui est connecté à l'arceau intermédiaire (15) et/ou à l'arceau avant (14) et/ou l'arceau d'extrémité (16) de sorte qu'il puisse être articulé, dans lequel son axe de charnière se trouve à ou près d'une extrémité inférieure de l'arceau intermédiaire (15) et/ou de l'arceau avant (14) et/ou de l'arceau d'extrémité (16).

7. Conteneur selon l'une de revendications 2 à 6, dans lequel les rails de guidage (18) présentent une fente de guidage (19) dans sa direction longitudinale, et dans lequel le faux châssis (2) présente plusieurs éléments de guidage (23), tels que des rouleaux de roulement, qui sont reçus dans les fentes de guidage (19) respectives.

8. Conteneur selon l'une des revendications précédentes, dans lequel la construction de bâche coulissante (9) peut être entraînée par un moteur, de préférence un moteur pneumatique (30).

9. Conteneur selon l'une des revendications précédentes, dans lequel au moins une chaîne d'entraînement (34) du faux châssis (2) passe autour de deux pignons (32, 33) qui sont montés près des extrémités du faux châssis (2), la chaîne d'entraînement (34) étant connectée à l'arceau avant (14) au moyen d'un doigt d'accrochage (35).

10. Conteneur selon la revendication 9, dans lequel un pignon (32) peut être entraîné par le moteur (30).

11. Conteneur selon la revendication 9 ou 10, dans lequel le doigt d'accrochage (35) comprend une pince à chaîne (36) et une tige de connexion (37), tige de connexion (37) qui est connectée par une première extrémité à la pince à chaîne (36) de sorte qu'elle puisse pivoter et est connectée par une deuxième extrémité à l'arceau avant (14) de sorte qu'elle puisse pivoter.

12. Conteneur selon la revendication 3, dans lequel la paroi avant (11) comprend au moins un crochet de verrouillage (40.43) destiné à venir en prise sur l'arceau avant (14), crochet de verrouillage (40, 43) qui est déplaçable entre une position de verrouillage, dans laquelle l'arceau avant (14) est saisi par le crochet de verrouillage (40, 43), et une position de dégagement, dans laquelle l'arceau avant (14) est libéré par le crochet de verrouillage (40, 43).

13. Conteneur selon la revendication 12, dans lequel le crochet de verrouillage (40, 43) est prétendu dans la direction de la position de verrouillage par un bras d'équilibre (44).

14. Conteneur selon la revendication 12 ou 13, dans lequel le crochet de verrouillage (40, 43) peut être actionné par un soufflet pneumatique (52) dans la direction de la position de dégagement.

15. Conteneur selon la revendication 3, dans lequel l'arceau avant (14) comprend une bande de caoutchouc sur le côté faisant face à la paroi avant (11) et la paroi avant (11) présente une nervure correspondante sur le côté faisant face à l'arceau avant (14).

16. Contenant selon l'une des revendications précédentes, dans lequel les arceaux (14, 15, 16) sont convexes du côté éloigné du faux châssis (2).

17. Conteneur selon l'une des revendications précédentes, dans lequel la feuille de recouvrement (10) comprend une bande de plastique sur son fond, laquelle s'étend dans la direction longitudinale de l'arceau avant (14) à l'arceau d'extrémité (16).

18. Conteneur selon l'une des revendications précédentes, dans lequel les dimensions du conteneur (1) en position déployée correspondent essentiellement aux dimensions d'un conteneur ISO.
